# EUROPÄISCHE PATENTANMELDUNG

(11) **EP 0 526 688 A2**
(43) Veröffentlichungstag der Anmeldung: **10.02.1993**
(21) Anmeldenummer: 92102893.2
(22) Anmeldetag: 21.02.1992
(51) Int. Cl.: G06F 1/16, H04B 7/24

(54) **Kopplungsvorrichtung zum wechselseitigen Übertragen von Daten- und/oder Steuersignalen zwischen einer Basisstation eines Funktelefonsystems und einem Computer**

(30) Priorität: 05.08.1991 DE 4125874
(71) Anmelder: ROBERT BOSCH GMBH, 70442 Stuttgart (DE)
(72) Erfinder: Borwitzky, Marcel, Dipl.-Ing., W-1000 Berlin 19 (DE)

(57) **Zusammenfassung**

2.1 Um z.B. mit einem Autotelefon Daten übertragen zu können, werden nach dem Stand der Technik zusätzlich ein Interface, ein Modem und ein Computer benötigt. Der Erfindung liegt daher die Aufgabe zugrunde, den für eine Daten- und/oder Steuersignalübertragung benötigten Aufwand zu reduzieren und die Bedienung für den Benutzer zu vereinfachen.

2.2 Die Lösung der Aufgabe besteht darin, daß eine in den Computer (10) einfügbare Leiterplatte (20) alle Baustufen (40, 41) und Bauteile (32) für die Hochfrequenz-Übertragung der Signale aufweist.

## Beschreibung

Die Erfindung geht von einer Kopplungsvorrichtung nach dem Oberbegriff des Anspruchs 1 aus.

Es ist eine derartige Kopplungsvorrichtung bekannt (Funkschau, 1990, Heft 26, Seite 42), die eine Datenverbindung zwischen einem mit einem besonderen Interface ausgerüsteten Autotelefon und einem Computer, z.B. einem Personal Computer, herstellt. Für die Übertragung werden also mehrere Komponenten, nämlich ein Mobiltelefon, ein Interface, ein Modem und ein Computer, benötigt.

Der Erfindung liegt die Aufgabe zugrunde, den für eine Daten- und/oder Steuersignalübertragung benötigten Aufwand zu reduzieren und die Handhabung für den Benutzer einfacher zu gestalten.

Diese Aufgabe wird bei einer Kopplungsvorrichtung durch die in dem Anspruch 1 aufgeführten Maßnahmen gelöst. Die Kopplungsvorrichtung hat den Vorteil, daß auf ein Autotelefon vollständig verzichtet werden kann und daß der Benutzer keine zusätzlichen Handhabungen, wie z.B. das Anschließen eines Modems, auszuführen hat. Der Benutzer braucht also z.B. nur seinen Personal Computer (PC) bei sich zu haben, um jederzeit Daten-und/oder Steuersignale senden oder empfangen zu können.

Ein Ausführungsbeispiel der Erfindung ist in der Zeichnung anhand zweier Figuren dargestellt und wird im folgenden näher erläutert. Es zeigen:
Fig. 1 eine Schnittansicht eines Personal Computers mit der erfindungsgemäßen Kopplungsvorrichtung und
Fig. 2 Ein Blockschaltbild der Kopplungsvorrichtung.

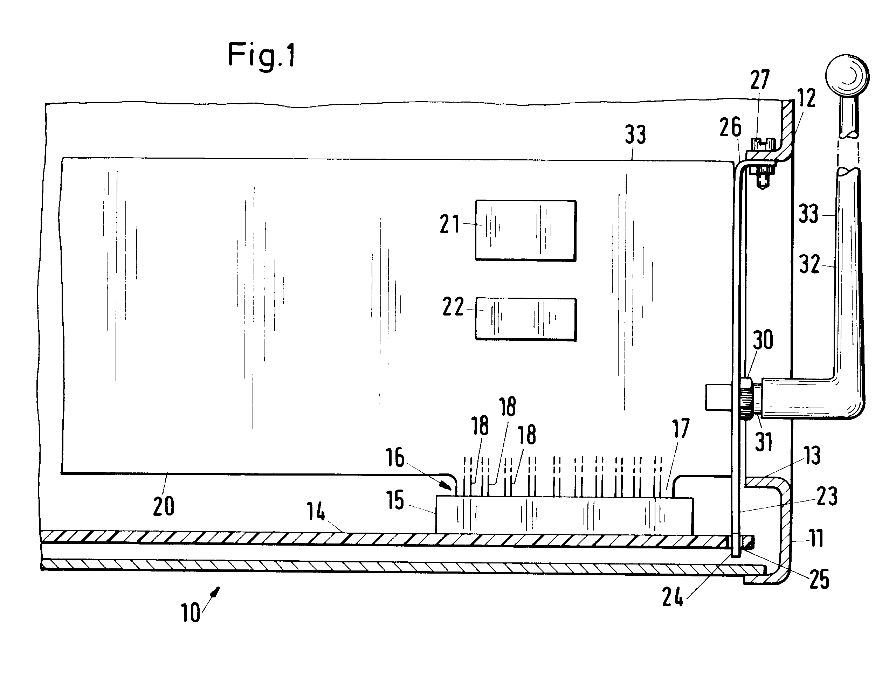

In Fig. 1 bezeichnet 10 einen Personal Computer, dessen Gehäuse 11 in einer vertikalen Seitenwand 12 eine Ausnehmung 13 aufweist. Das Gehäuse 11 enthält eine horizontale Computer-Platine 14, die unter anderem eine leistenförmige Mehrfachbuchse 15 trägt. In die Mehrfachbuchse 15 paßt eine entsprechende Steckerleiste 16, die durch einen leistenförmigen Vorsprung 17 mit parallelen Leiterbahnen 18 einer in dem Gehäuse 11 vertikal angeordneten Leiterplatte 20 gebildet wird. Die Leiterplatte trägt mehrere Halbleiterbausteine, von denen in Fig. 1 der Übersichtlichkeit halber nur zwei Halbleiterbausteine 21 und 22 gezeigt sind. Eine an einer Schmalseite der Leiterplatte 20 befestigte längliche Halteschiene 23 ist mit ihrem einen Ende mit dem Gehäuse 11 und mit ihrem anderen Ende mit der Computer-Platine 14 in der Weise verbunden, daß das zuletzt genannte Ende in eine Lasche 24 übergeht, die in eine entsprechende Öffnung 25 der Computer-Platine 14 paßt. Das andere Ende der Halteschiene 23 geht in eine Abwinkelung 26 über, die mittels einer Schraubverbindung 27 mit dem Gehäuse 11 lösbar verbunden ist. In der Halteschiene 23 ist eine mit der Leiterplatte 18 verbundene Koaxialbuchse 30 befestigt, in die ein Koaxialstecker 31 einer vorzugsweise als Stabantenne ausgebildeten Sende/Empfangsantenne 32 paßt. Die Antenne ist abgewinkelt und verläuft auf dem größten Teil ihrer Länge parallel zu der Außenseite der Seitenwand 12 des Gehäuses 11. Die Leiterplatte 20 und die Sende/Empfangsantenne 32 bilden zusammen eine Kopplungsvorrichtung 33.

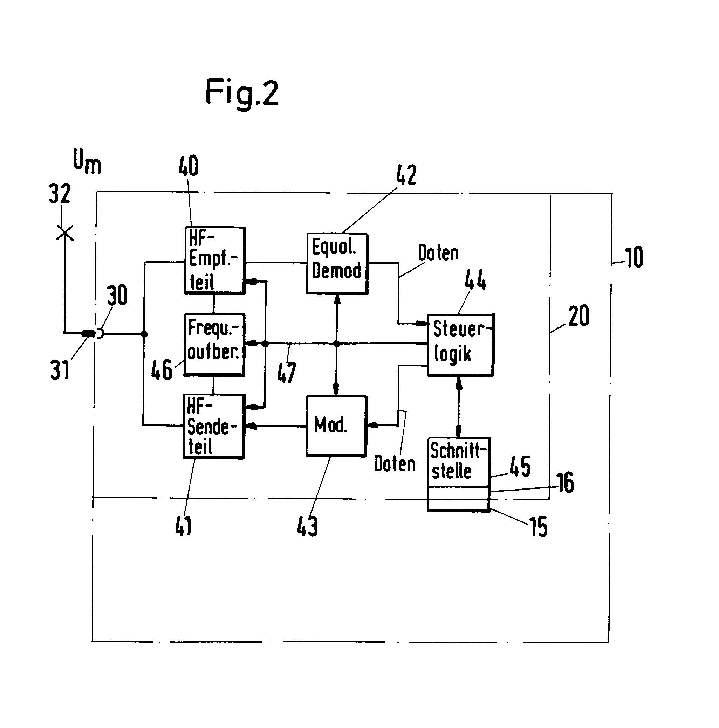

Die Leiterplatte 20 (Fig. 2) trägt alle Schaltungselemente der für die Kopplungsvorrichtung 10 benötigten elektrischen Baustufen und Bauteile. Zu der Schaltung gehören ein mit der Sende/Empfangsantenne 32 verbundenes Hochfrequenz-Empfangsteil 40 und -Sendeteil 41, ein mit dem Ausgang des Empfangsteils verbundener Equalizer und Demodulator 42 und ein mit dem Sendeteil 41 verbundener Modulator 43. Demodulator 42 und Modulator 43 sind mit einer Steuerlogik 44 verbunden, an die eine Schnittstelle 45 angeschlossen ist, die über die Leiterbahnen 18 (Fig. 1) und den Mehrfachsteckverbinder 15 mit der Computer-Platine 14 in Verbindung steht. Die Steuerlogik 44 steht über einen Steuer-Bus 47 erstens mit dem Demodulator 42, zweitens mit dem Modulator 43, drittens mit dem Empfangsteil 40, viertens mit dem Sendeteil 41 und fünftens mit einer Vorrichtung zur Frequenzaufbereitung 46 in Verbindung. Die Schaltung umfaßt somit alle Baustufen eines Autotelefons, die zur Übertragung von Daten-und/oder Steuersignalen erforderlich sind.

An Stelle der in Fig. 1 vertikal angeordneten Leiterplatte 20 kann je nach Computer-Typ auch eine horizontal angeordnete Leiterplatte vorgesehen sein. Wenn, wie in dem Ausführungsbeispiel nach Fig. 1 angegeben, die Steckverbinderteile 30 und 31 gegeneinander verdrehbar sind, kann auch in diesem Fall die Sende/Empfangsantenne 32 wie in Fig. 1 vertikal ausgerichtet werden.

## Patentansprüche

1. Kopplungsvorrichtung zum wechselseitigen Übertragen von Daten- und/oder Steuersignalen zwischen einer Basisstation eines Funktelefonsystems und einem Computer, dadurch gekennzeichnet, daß die Kopplungsvorrichtung (33) eine in den Computer (10) einfügbare Leiterplatte (20) mit mindestens einer Steuerlogik (44), einem Modulator (43), einem Demodulator (42), einem Hochfrequenz-Sendeteil (41), einem Hochfrequenz-Empfangsteil (40) sowie einer Sende- und Empfangsantenne (32) aufweist.

2. Kopplungsvorrichtung nach Anspruch 1, dadurch gekennzeichnet, daß die Leiterplatte (20) als eine auf eine Computer-Platine (14) aufsteckbare Leiterplatte ausgebildet ist.

3. Kopplungsvorrichtung nach Anspruch 1 oder 2, dadurch gekennzeichnet, daß die Sende/Empfangsantenne (32) als Stabantenne ausgebildet ist, die aus dem Gehäuse (11) des Computers (10) herausragt.

4. Kopplungsvorrichtung nach Anspruch 3, dadurch gekennzeichnet, daß die Sende/Empfangsantenne (32) lösbar mit der Leiterplatte (20) verbunden ist.

5. Kopplungsvorrichtung nach Anspruch 3 oder 4, dadurch gekennzeichnet, daß die Sende/Empfangsantenne (32) derart abgewinkelt ist, daß der größere Teil ihrer Länge parallel zu der Außenseite einer vertikalen Seitenwand (12) des Gehäuses (11) des Computers (10) steht.

6. Kopplungsvorrichtung nach Anspruch 4 oder 5, dadurch gekennzeichnet, daß der Fußpunkt der Sende/Empfangsantenne (32) mit einem ersten koaxialen Steckverbinderteil (31) und die Leiterplatte (20) mit einem zweiten koaxiallen Steckverbinderteil (30) versehen ist und daß erstes und zweites Steckverbinderteil (31, 32) axial gegeneinander verdrehbar sind.
